# EUROPEAN PATENT SPECIFICATION

(11) **EP 3 243 674 B1**
(45) Date of publication and mention of the grant of the patent: **03.03.2021**
(21) Application number: 15875284.0
(22) Date of filing: 18.12.2015
(51) Int. Cl.: B60C 29/00, B60C 5/20, B60C 17/01, F16K 11/07, F16K 15/20

(54) **VALVE WITH A NUMBER OF PASSAGE DUCTS AND INCREASED AIRTIGHTNESS**
VENTIL MIT EINER ANZAHL AN DURCHGANGSLEITUNGEN UND ERHÖHTER LUFTDICHTHEIT
VALVE À MULTIPLES CONDUITS DE PASSAGE ET À ÉTANCHÉITÉ AUGMENTÉE

(30) Priority: 30.12.2014 ES 201401059
(43) Date of publication of application: 15.11.2017
(73) Proprietor: Advantaria, SL, 28760 Tres Cantos, Madrid (ES)
(72) Inventor: REQUENA RODRIGUEZ, Ignacio, 28760 Tres Cantos (Madrid) (ES)
(86) International application number: PCT/ES2015/000181
(87) International publication number: WO 2016/107940

(56) References cited:
- CN-A- 101 590 789
- CN-A- 103 231 631
- CN-A- 103 231 631
- CN-U- 201 448 493
- CN-U- 203 543 549
- DE-C- 631 538
- US-A- 1 788 334
- US-A- 2 189 485
- US-A- 2 189 485
- US-A- 3 476 168

## Description

### Field of the invention

The invention is included within the field of gas or liquid inflation and deflation for tyres, wheels and inner air tubes for all types of vehicle. In particular, it is integrated among the devices that allow the sealing or communication of air between the interior and the exterior of a tyre or inner tube with various differentiated airtight volumes.

### State of the art

In the latest decades several innovations in the field of road safety have led to the development of compartmentalized tyres and tubes which incorporate multiple airtight volumes in their interior. This allows maintaining the wheel at sufficient pressure in the event of a breakage of one of the compartments, avoiding losing control of the vehicle. Until recently, the lack of a system allowing inflating and deflating all the compartments simultaneously at the same pressure, with a single valve, has prevented their compatibility with commercial tyres and standard inflation and deflation systems. This lack of compatibility has had the effect of delaying the launch of this type of system to the market. In order to overcome this difficulty a specific valve has been developed allowing simultaneous filling and emptying of the various separate compartments which form it, at the same homogeneous pressure; compatibility is maintained with commercial rims and inflation and deflation systems, as disclosed in the patent document with International Application Number WO 2013/144395, of 27 March 2013, (Advantaria SL).

This patent document discloses a valve which allows, in its open position, simultaneous flow through all its ducts, of air or liquid at the same homogeneous pressure, as well as the air-tight closure of all ducts when in the closed position.

This valve, like other previous developments, has an interior flow channel between the two ends of the valve; in the case of the innovation disclosed in document WO 2013/144395 A2, it is characterized in that there are several cavities located in the interior of the valve body, each of which has separate connection means with each sealed volume of the compartmentalized tyre or tube, it being possible to connect these cavities between one another through a flow channel and having an opening/closing element formed by:
- an opening/closing cover of the flow channel;
- a connection/disconnection sealing divider of the communication channel.

Thereby allowing the flow channel and the communication channel to be simultaneously opened and closed, maintaining all airtight volumes of a compartmentalized tyre or tube at the same initial pressure, a necessary condition for road use. On the other hand, the arrangement of the valve components enable its use with any type of existing rim, as well as its compatibility with common inflation and deflation connectors in air pumps or at service stations.

In this regard, the need to equip all components related to the automotive industry to the highest possible level of security, as well as the need to increase the useful life of these valves have led to the development of a new innovation which allows the degree of airtightness to be increased, increasing the pressure difference the valve is capable of supporting in its closed position, and making it possible to extend the useful life of the same.

In this sense, the connection/disconnection sealing divider of the communication channel of the valve disclosed in the previous document can produce, when moved, friction due to physical contact with the inner walls of the cavities of the valve body.

This disadvantage related to the friction created in a moving sealing element also appear in a previous patent document US 2189485 by J. C. Crowley. This document describes a valve that allows to inflate two tyre tubes simultaneously. In this instance, this valve design is not compatible with existing rim standards, as it does not discloses a way to locate in parallel both tube members in the interior of the hollow area below the valve internal covering of elastomer material. This requirement is necessary to be able to introduce a valve in a standard rim hole from its interior.

This document's valve design, is characterized in that there are two cavities located in the interior of the valve body, each of which has separate connection means with each sealed volume of the compartmentalized tyre or tube, it being possible to connect these cavities between one another through a communication channel. It has also a mobile cavity that can be displaced by the movement of the rod. This movement opens or closes the entrances to both cavities simultaneously. This is achieved as the wall of this mobile cavity blocks the connection means to one of the tyre tubes in the rod closed position, and the top extreme of the mobile cavity blocks its entrance in this same rod closed position.

To achieve this, the wall of the mobile cavity needs to be contacting the wall of the valve, as this airtight contact is required to be able to block the connection means in the closed position. When this wall of the mobile cavity is displaced, this contact also produces friction with the wall of the valve.

In both mentioned documents WO 2013/144395 and US 2189485, this friction can cause slight erosion in the areas of contact between the two surfaces. This can lead to a reduction in the degree of airtightness between the different cavities and therefore between the different airtight volumes of the tyre or tube. This reduction of airtightness may be particularly relevant in the case of driving a vehicle after one of the airtight compartments has suffered a puncture or rupture, since in this situation the complete isolation of the damaged volume with respect to the remaining volumes, which maintain sufficient pressure, is essential for maintaining control of the vehicle.

On the other hand, possible erosion by friction between the moving surfaces can also result in a shorter useful life of the valve.

Also, the existence of contact areas in the mobile elements implies the need for very high precision in the manufacturing dimensional tolerances for the various elements in order to simultaneously allow such movement and maintain the degree of sealing required. Thus, when a difference in pressure between two opposite sides of a mobile element is produced, there is the possibility of a decrease in the sealing of the volume subjected to a higher pressure, due to possible leakage of gas or liquid through the dimensional difference produced by the need to include a minimum tolerance which facilitates the movement of the mobile element.

For these reasons, the development of the invention herein disclosed aims to eliminate the existence of friction surfaces, increasing the sealing, the operating maximum pressure and the useful life of the valve. Therefore, as an added effect, the number of items in contact with one another are reduced, allowing for a simpler manufacturing process by reducing the level of accuracy required for the valve components.

That is, the problem to be solved by the present invention may therefore be regarded as to provide an alternative valve construction with higher ease to manufacturing, and with improved sealing.

### Description of the invention

As mentioned in the previous section, this invention relates to an air (or other gas or liquid) flow valve for use with compartmentalized tyres or tubes. The upper end of this valve contains a cylinder, through the interior of which a mobile rod is run; the contour of the cylinder being provided with a thread for adapting it to the nozzles of standard inflation and deflation systems that exist in the market.

There is a flow channel in the interior of the valve which allows communication between an upper cavity, in open contact with the upper end of the valve, and the bottom of the valve, wherein several independent cavities are located.

The independent cavities located inside the bottom of the valve each have a surface which closes around a volume running parallel to the rod displacement axis. In this way, each surface surrounds a volume which can only be accessed through its two ends; it can have openings or orifices in its upper end for communication with other elements. In its lower end, each one of these cavities has separate connection means with each airtight volume of the compartmentalized tyre or tube.

The simultaneous opening and closing of all of the valve cavities is done by means of displacing several valve elements in a way solidly joined with the movement of the rod produced by the pressure of the nozzle protuberance of the inflation/deflation device.

In the absence of the pressure exerted by the nozzle protuberance the rod returns to its original position, through the action of an elastic mechanism.

The elements which are moved solidly joined to the rod include a flow channel cover, as well as one, or several, lower mobile cavities.

Each lower mobile cavity has a communication channel located in its upper end, such that in the rod closed position, the communication channel is blocked by a closing surface fixed to the main body of the valve. When the rod is displaced, in its open position, the lower mobile cavity is located far from said fixed closing surface, enabling fluid to enter or exit through this communication channel.

The fixed closing surface, attached to the main body of the valve, and on which the end of the communication channel of the lower mobile cavity presses, is made out of an elastic material, preferably an elastomer. In this way, the tension exerted by the elastic mechanism associated with the rod, as well as the pressure gradient from the interior of the tyre or tube, push the lower mobile cavity in an outward direction, leaving the communication channel partially set into the elastic material and being, therefore, perfectly sealed.

By displacing the entire lower mobile cavity, friction surfaces are eliminated and the requirements in relation to the accuracy of the components are reduced, as described above, making it easier to mass produce. This design also makes it possible to considerably increase the difference of pressures that may exist between the outside of the valve and the lower cavities, and between some lower cavities and others. Likewise, this absence of contact surfaces, except those in close proximity to any guide elements which do not affect airtightness, helps to prolong the useful life of the valve.

There are several possible embodiments of this invention, depending on both the number of lower cavities and on the use to which the valve is going to be given. In this sense, there are different designs for use in compartmentalized tyres, designs for use in compartmentalized tubes and designs to be simultaneously used with various non-compartmentalized tubes. The main technical differences between these embodiments are defined, apart from by an eventual covering of elastomer material in the rim contact area, by the fact that the volume which the lower end of the valve surrounds is airtight in nature, as in the case of compartmentalized tyres or tubes, or by the fact that the lower end of the valve is in contact with a volume at the same pressure as the atmosphere surrounding the wheel, as occurs in the case of using multiple normal tubes positioned side by side. In the latter case an airtight auxiliary device at the outlet of the lower end of the valve is required in order to maintain the various ducts connecting the tubes at the same initial pressure.

### Description of the drawings

Figure 1 shows a cross-section of the valve including the elastomer material tread for setting into a motor vehicle rim, in the valve closed position.
Figure 2 shows a cross-section of the valve including the elastomer material tread for setting into a motor vehicle rim, in the valve open position, it being coupled to the inflation/deflation device nozzle. This figure shows the flow of air during the inflation process.
Figure 3 shows an isometric cross-section of the valve, without the elastomer material tread, in the closed position. This figure particularly shows the closing device and how the external air flow does not pass through the closure of the lower cavities (interior/mobile and exterior/fixed).
Figure 4 shows a detailed magnified isometric cross-section of the valve closing device in the open position. This figure shows the flow of inflation air and its passage from the upper cavity to the lower cavities (interior/mobile and exterior/fixed).
Figure 5 shows a cross-section of a motor vehicle compartmentalized tyre next to the rim incorporating the valve of the invention. This figure shows the flow of air entering and exiting the various volumes.
Figure 6 shows a cross-section of a bicycle tube with two compartments incorporating the valve by means of a vulcanizing process.
Figure 7 shows a cross-section of a bicycle wheel formed by three parallel tubes, a tread, the valve of the invention and an airtight auxiliary device for filling the parallel tubes.

The different components that appear in the drawings are listed below:
1 - Interior of the air inlet/outlet mouth to the valve.
2 - Thread of the valve cap.
3 - Longitudinal mobile rod.
4 - Rod Guide.
5 - Metal washer upper spring support.
6 - Covering of elastomer material for use in car rims.
7 - Upper cavity.
8 - Thread for introducing the upper component of the valve.
9 - Spring.
10 - Metal washer lower spring support.
11 - Elastomer material washer (fixed closing surface).
12 - Communication channel between the lower interior cavity (mobile cavity) and the lower exterior cavity (fixed cavity).
13 - Body wall of the lower component of the valve.
14 - Lower interior cavity (mobile cavity) of the valve.
15 - Lower interior cavity wall.
16 - Lower exterior cavity (fixed cavity) of the valve.
17 - Communication duct between the lower interior cavity (mobile) and the inside of the tyre.
18 - Hollow area above the valve internal covering of elastomer material.
19 - End of the lower interior cavity (mobile cavity).
20 - Area of reduced diameter of the elastomer material covering.
21 - Stop area with the rim of the elastomer material covering.
22 - Hollow area below the valve internal covering of elastomer material.
23 - Air inlet direction in valve mouth.
24 - Air inlet direction in lower exterior cavity (fixed cavity).
25 - Air inlet direction in lower interior cavity (mobile cavity).
26 - Air flow direction through the lower exterior cavity (fixed cavity).
27 - Air inlet direction to the tyre from the lower exterior cavity (fixed) of the valve.
28 - Air inlet direction to the tyre from the lower interior cavity (mobile) of the valve.
29 - Inflation/deflation device metal nozzle.
30 - Inflation/deflation device protuberance for rod displacement.
31 - Interior flexible duct of inflation/deflation device.
32 - Air inlet direction from inflation/deflation device.
33 - Elastomer material ring of the inflation/deflation device.
34 - Orifice in the elastomer material ring of the inflation/deflation device.
35 - Interior of the inflation/deflation device neck.
36 - Ribbed surface of the metal nozzle for introducing the flexible duct.
37 - Inflation/deflation device.
38 - Lever for securing the inflation/deflation device.
39 - Flexible duct of the inflation/deflation device.
40 - Air inlet direction through side trims of spring upper support.
41 - Flow channel between the upper and lower cavities.
42 - Air inlet direction through the flow channel between the upper and lower cavities.
43 - Air inlet direction in lower interior cavity (mobile).
44 - Air inlet direction through side trims of mobile closing surface for the flow channel between the upper and lower cavities.
45 - Mobile closing surface for the flow channel located in the lower interior cavity (mobile cavity).
46 - Surface of the rim parallel to the wheel axis of rotation.
47 - Surface of the rim for housing the tyre.
48 - Outer edge of rim.
49 - Surface for securing the rim to the shaft by means of threaded screws.
50 - Orifice in the rim for introducing the valve.
51 - External tyre side surface.
52 - Joining curvature between the side surface and the tyre running surface.
53 -Tyre running surface.
54 - Internal tyre structural reinforcement.
55 - Contact surface between tyre and rim.
56 - End of the tyre inside the rim.
57 - Separating wall between the main and secondary tyre volumes.
58 - Main tyre volume.
59 - Secondary tyre volumes.
60 - Communication orifices between the secondary tyre volumes.
61 - Connecting tube between the valve and the secondary tyre volumes.
62 - Through-hole between the connecting tube and the secondary tyre volumes.
63 - End of the valve outside the rim.
64 - Edge of elastomer material covering of the valve inside the rim.
65 - Air inlet/outlet direction in valve.
66 - Air inlet/outlet direction from valve to the main tyre volume.
67 - Air inlet/outlet direction in the secondary tyre volumes.
68 - Air flow direction between the secondary tyre volumes.
69 - Covering of elastomer material around the valve in a bicycle tube.
70 - Interior wall of the bicycle tube in contact with the rim.
71 - Connection duct between the valve lower exterior cavity (fixed) and the inside of the tube.
72 - Connection between the valve lower interior cavity (mobile) and the connecting tube with the secondary tube volume.
73 - Wall of the connecting tube with the secondary tube volume.
74 - Main tube volume.
75 - Connecting tube between the valve and the secondary tube volume.
76 - Separating wall between the main and secondary tube volumes.
77 - Secondary tube volume.
78 - Exterior wall of the bicycle tube in contact with the tread.
79 - Side of valve fitting with the airtight auxiliary device and the rim.
80 - Communication duct between the valve lower exterior cavity (fixed) and the airtight auxiliary device.
81 - Central area of bicycle rim.
82 - Anchoring thread in the lower interior cavity (mobile cavity).
83 - Inside of the airtight auxiliary device.
84 - Connection duct between the lower interior cavity (mobile) and the central tube.
85 - Airtight auxiliary device walls.
86 - Inlet/outlet orifice to central tube.
87 - Inlet/outlet orifice to airtight auxiliary device.
88 - Connection duct between the airtight auxiliary device and the central tube.
89 - Inlet/outlet orifice to side tube.
90 - Space between tyre and rim.
91 - Side of bicycle rim.
92 - Bicycle tread area in contact with the rim.
93 - Side of bicycle tread.
94 - Central tube.
95 - Left tube.
96 - Right tube.
97 - Separating wall of the central tube with the side tubes.
98 - Separating wall of the central tube with the running surface.
99 - Running surface of the bicycle wheel.

### Description of a preferred embodiment

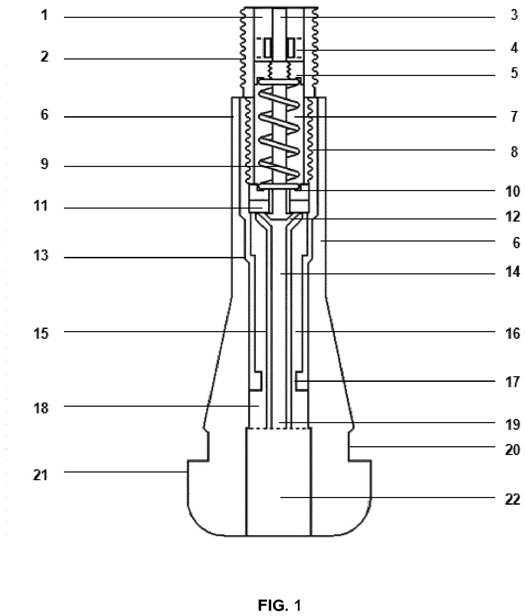

A preferred embodiment refers to a valve with a cylindrical upper cavity (element 7, figures 1, 2 and 6) and two lower cavities (elements 14 and 16, figures 1, 2, 3, 4, 6, 7), also with cylindrical geometry, in a coaxial arrangement.

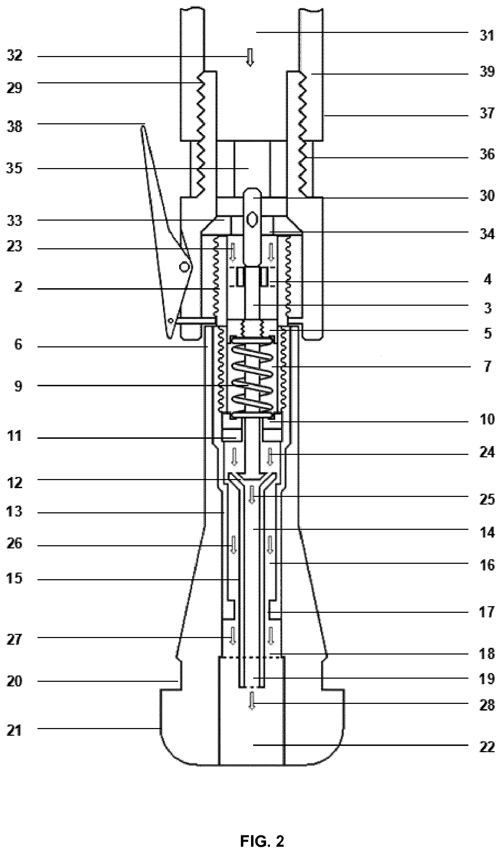

The cylindrical upper cavity is surrounded by a threaded surface (8, figure 1), prepared for adapting to a plug and for use with a standard inflation/deflation system common in service stations. A cylindrical rod (3, figure 2) runs through the inside of this upper cavity, which is displaced due to the pressure caused when contact is made with the internal protuberance of the inflation/deflation system nozzle (30, figure 2). The rod displacement direction is determined by guide elements (element 4, figures 1, 2 and 3) and coincides with the axis of symmetry common to the two lower cavities and to the upper cavity.

In figures 1 and 2 it can be observed how the spring (9) which constitutes the rod elastic mechanism is located inside the upper cavity (7), maintaining a diameter slightly smaller than the diameter of the same, with its ends running through the inside of two cylindrical groves existing in the metal washers of the upper (5) and lower (10) spring supports. In this way the outer diameter of the spring is increased when it is compressed, not when it comes into contact with the walls of the upper cavity, also occurring at a distance from the walls at all times.

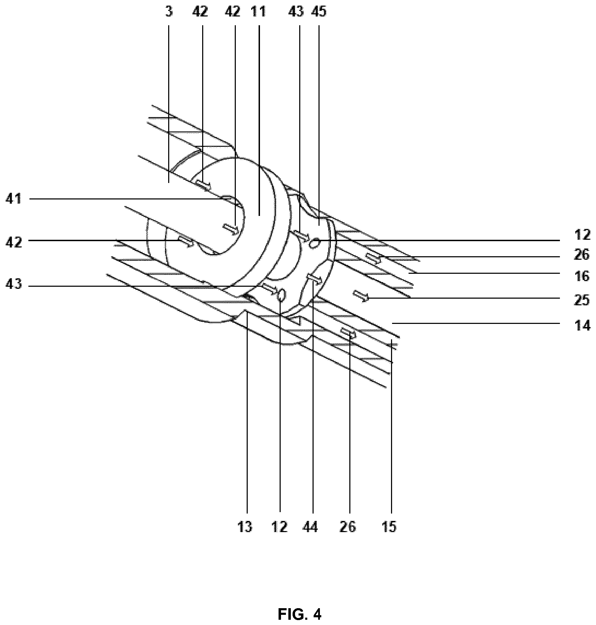

The upper cavity communicates with the two lower concentric cavities (14 and 16) through a flow channel (element 41, figure 4) through the inside of which the rod is displaced.

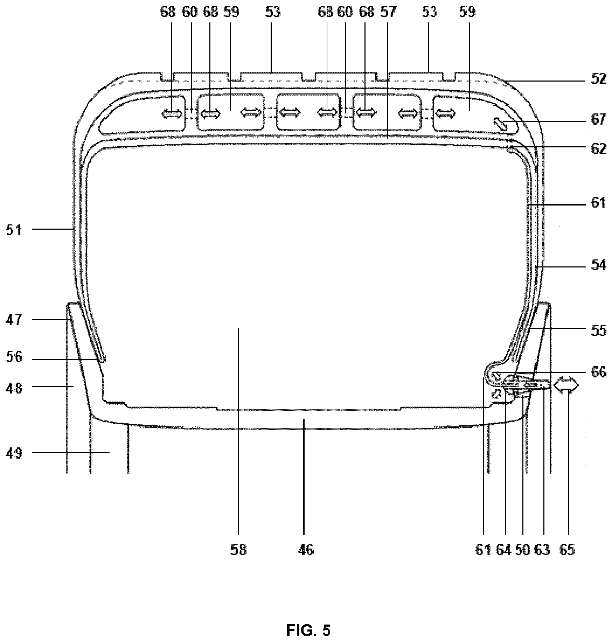

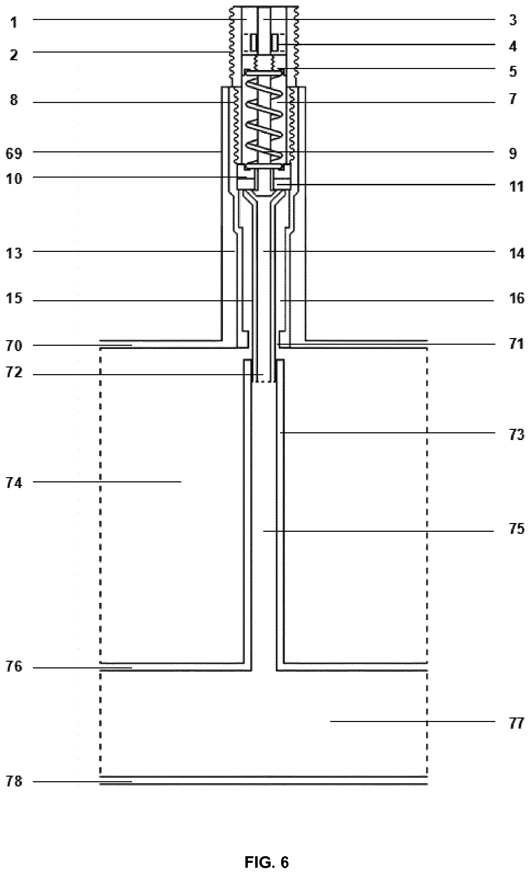

The lower interior cavity (14) is mobile in nature and has a length greater than the lower exterior cavity (16), being able to be displaced by guide elements located on the inside of the valve body. An elastic duct can be coupled to the lower end (19) of this mobile cavity. This elastic duct constitutes a connection means that communicates with the secondary tyre volume (element 59, figure 5) or tube volume (element 77, figure 6). This secondary volume is usually located in the area with the highest probability of breakage or puncture, on the running surface of the wheel.

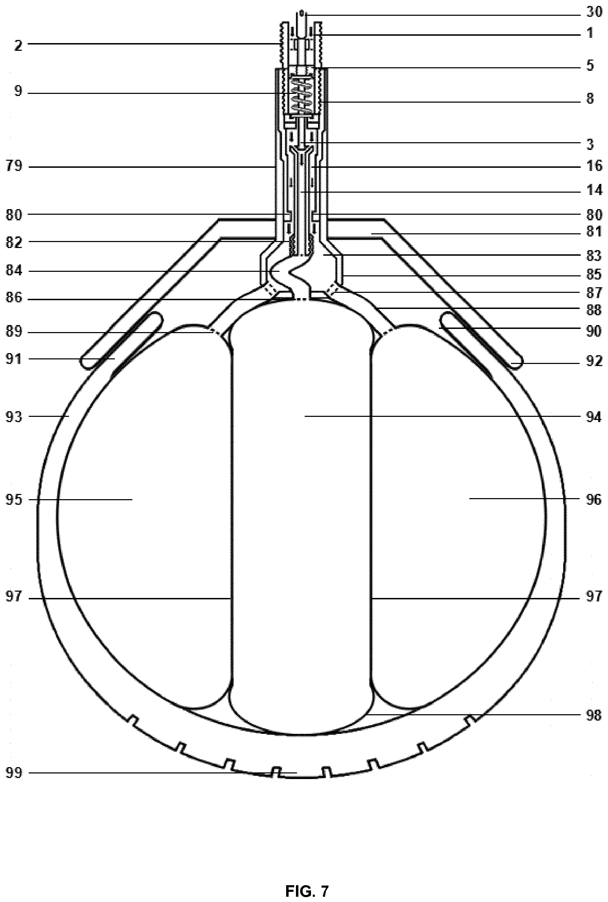

The inflation of the main compartment of the compartmentalized tyre or tube is done through the communication of the lower exterior cavity through a duct or ducts (element 17, figures 1 and 2; element 71, figure 6 and element 80, figure 7) with this volume or volumes.

In this way, figure 2 shows how, in the valve open position, air flow (32) can travel from the inflation system, passing through the upper cavity (7), and entering the lower exterior cavity (16) (fixed cavity) through the flow channel. Following this, part of the air flow (26) at the lower exterior cavity surrounds the outer contour of the lower interior cavity (14), and another part of the air (25) passes through the communication channels of the lower interior cavity, accessing the same. Finally, the air accesses from each one of the two lower cavities to the main and secondary volumes (27 and 28).

Likewise, in the case that when the rod is in the open position, there is a lower pressure in the inflation/deflation system nozzle than the pressure existing in the interior of the wheel, the air flow will reverse, causing the tyre or tube to deflate.

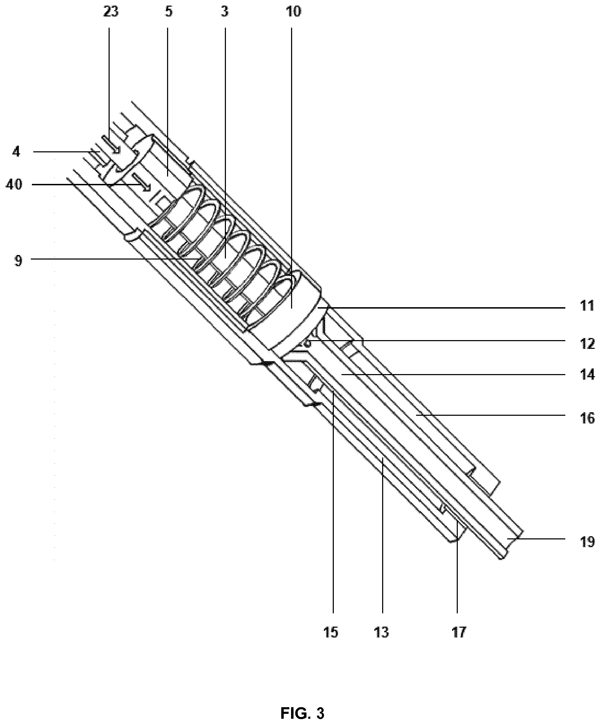

Figure 4 shows the valve closing area in detail. The mobile closing surface for the flow channel (45) between the upper and lower cavities is located in the upper part of the lower interior cavity (mobile cavity). This mobile closing surface in the lower cavity is perpendicular to the displacement direction of the cavity. In the valve closed position (figure 3), the mobile closing surface is in contact with an elastomer material seal (11), resulting in the closure of the flow channel.

As shown in figure 4, communication channels (12) between the lower cavities are made in this mobile closing surface. These orifices are located in such a way that the distance between the orifice contour closest to the axis of symmetry and this axis is greater than the flow channel radius. Thereby ensuring that there is no communication between the flow channel and these orifices when the rod is in the rest position. In this position, a fixed closing surface (11) constituted by the elastomer material seal, and which is attached to the valve body, completely plugs the communication channels between the lower exterior cavity (fixed cavity) and the lower interior cavity (mobile cavity), such that there is no flow between the two.

This configuration ensures that the opening of the flow channel and the communication orifices between cavities occur simultaneously by displacing the rod. Furthermore, the outer radius of the mobile closing surface (45, figure 4) is greater than the outer radius of the lower interior cavity (15, figure 4), such that when the pressure in the lower exterior cavity is higher than the pressure on the exterior of the valve, this pressure gradient pushes the lower base of the mobile closing surface towards the elastomer material seal, increasing the airtightness of the system.

Figures 1, 2 and 5 show the covering of elastomer material (6) for insertion into a motor vehicle tyre, according to industry standards, having an area of reduced diameter (20) for insertion in the rim orifice (50) and an area of increased diameter (21) which serves as the securing stop of the same.

Figure 6 shows a valve in which the incorporation of a bicycle tube has been carried out during the manufacturing of the tube, during the vulcanization process, leaving the valve attached by means of a covering of elastomer material which forms the tube, through the inner wall area (70) in contact with the rim.

In the two previous embodiments the two lower cavities are in communication with the inside of the tyre or tube that usually operate at a pressure higher than atmospheric pressure. In the case of using multiple separate tubes located side by side, as described in figure 7, there is an area (90) located between the rim (81) and the outside of the tubes, which is not airtight and which is at the same pressure as the pressure outside of the wheel.

In this last embodiment the placement of an airtight auxiliary device (85) at the outlet of the lower exterior cavity is required to allow maintaining the same inlet pressure throughout the system.

Thereby achieving, through the use of this auxiliary device, that the air exiting the lower exterior cavity is contained in the device volume and can only leave the space through the orifices (87) which give access to the connection means (88) with the side tubes (95 and 96). In addition, a flexible duct (84) is incorporated in the lower end (82) of the lower interior cavity, which runs through the inside of the airtight auxiliary device such that, when this mobile lower cavity is displaced, the duct is folded in the interior of the device. This flexible duct is in communication with another orifice in the wall of the airtight auxiliary device. There is another flexible duct through the external part of the airtight auxiliary device which connects this orifice with the inlet/outlet (86) of the central tube (94).

Therefore, using this airtight auxiliary device allows, in the case of parallel tubes, communicating various tubes at the same pressure when in the open position, and when in the closed position all tubes are isolated at an initial homogeneous pressure. In this way, adding this device allows using a general design of a common valve for compartmentalized tyres, compartmentalized tubes and parallel tubes.

## Claims

1. Valve for a compartmentalized tyre, wherein said valve has a body which has:
a) a first end (2) configured for coupling to inflation/deflation means of a compartmentalized tyre or tube;
b) a second end (18, 19), opposite the first end, configured for coupling to an inflation/deflation duct of the compartmentalized tyre or tube;
c) a flow channel (41) between the first end and the second end;
d) an opening/closing cover (45) of the flow channel solidly joined to a mobile rod (3);
e) at least two cavities (7, 14, 16) located in the interior of the valve body:
e1) a first cavity (14) comprising first connection means to a first compartment of the tyre or tube;
e2) a second cavity (16) comprising second connection means to a second compartment of the tyre or tube;
f) a communication channel (12) between the first cavity and the second cavity;
g) at least one of the first and second cavities (14) located in the interior of the valve body is adapted to be displaced with respect to the valve body, this cavity having its wall solidly joined to the mobile rod so this mobile cavity (14) and the mobile rod (3) are adapted to be displaced at the same time;
h) at least one of the first and second cavities (16) located in the interior of the valve body is fixed with respect to the valve body;
**characterized in that:**
i) there is a fixed closing surface (11) with respect to the valve body, forming an angle with the displacement direction of the mobile cavity, constituting a cover of the communication channel between the fixed cavity and the mobile cavity such that:
i1) in the rod resting position, the fixed closing surface is adapted to block the communication channel (12) between the fixed cavity and the mobile cavity, preventing any gas or liquid flow between both cavities;
i2) in the rod displacement position, the fixed closing surface is separated from the communication channel (12) between the fixed cavity and the mobile cavity, allowing gas or liquid flow between both cavities.

2. Valve for a compartmentalized tyre according to claim 1 wherein the cavity (16) located in the interior of the valve body, which is fixed with respect to the valve body, completely or partially surrounds the mobile cavity (14).

3. Valve for a compartmentalized tyre according to claims 1 or 2 wherein the opening/closing cover of the flow channel constitutes a mobile closing surface (45) located in the mobile cavity such that:
a) in the rod resting position, the mobile closing surface blocks the communication channel between the first end and the second end, preventing any gas or liquid flow therein;
b) in the rod displacement position, the mobile closing surface is separated from the communication channel between the first end and the second end, allowing gas or liquid flow therein.

4. Valve for a compartmentalized tyre according to claim 3 wherein the mobile closing surface (45) which constitutes the opening/closing cover of the flow channel makes contact with the fixed closing surface (11) which constitutes the communication channel cover between the fixed cavity and the mobile cavity, such that:
a) in the rod resting position, the mobile closing surface and the fixed closing surface make contact, simultaneously blocking the flow channel (41) between the first end and the second end, and the communication channel (12) between the fixed cavity and the mobile cavity;
b) in the rod displacement position, the mobile closing surface and the fixed closing surface are separated, thereby allowing gas or liquid flow, simultaneously, through the flow channel (41) between the first end and the second end, and through the communication channel (12) between the fixed cavity and the mobile cavity.

5. Valve for a compartmentalized tyre according to any of the previous claims wherein the communication channel (12) between the fixed cavity and the mobile cavity is displaced solidly joined to the mobile cavity.

6. Valve for a compartmentalized tyre according to any of the previous claims wherein the axis of symmetry of the mobile cavity coincides with the rod displacement axis.

7. Valve for a compartmentalized tyre according to any of the previous claims wherein the axis of symmetry of the fixed cavity coincides with the axis of symmetry of the mobile cavity.

8. Valve for a compartmentalized tyre according to any of the previous claims wherein the mobile rod displacement direction is determined by guiding elements (4) located in the interior of the valve body.

9. Valve for a compartmentalized tyre according to any of the previous claims wherein the mobile cavity displacement direction is determined by guiding elements located in the interior of the valve body.

10. Valve for a compartmentalized tyre according to any of the previous claims wherein the diameter of the mobile closing surface (45) located in the mobile cavity (14) is larger than the diameter of the external contour of the wall of this mobile cavity, such that, if the pressure inside the tyre is greater than the external pressure, the pressure gradient pushes the mobile cavity towards the first end of the valve, thereby increasing the sealing of the valve closure.

11. Assembly comprising a valve for a compartmentalized tyre according to any of the previous claims and an airtight auxiliary device, wherein the second end of the valve is connected to said airtight auxiliary device, such that:
a) - it has a wall which isolates the volume formed therein (85);
b) - it has two or more orifices drilled in its surface (86, 87);
c) - at least one of the orifices is communicated with the mobile cavity of the valve by means of a duct (84) through the interior of the airtight auxiliary device;
d) - each of the orifices is adapted to communicate with each one of the tyre or tube compartments by connecting means through the exterior of the airtight auxiliary device.

## Patentansprüche

1. Ventil für einen in Kammern unterteilten Reifen, wobei das Ventil ein Gehäuse hat, das Folgendes aufweist:
a) ein erstes Ende (2), das dazu konfiguriert ist, an ein Aufpump-/Auslass-Mittel eines in Kammern unterteilten Reifens oder Schlauchs angeschlossen zu werden;
b) ein zweites dem ersten gegenüberliegendes Ende (18, 19), das dazu konfiguriert ist, an eine Aufpump-/Auslass-Leitung des in Kammern unterteilten Reifens oder Schlauchs angeschlossen zu werden;
c) einen Durchflusskanal (41) zwischen dem ersten und dem zweiten Ende;
d) einen zu öffnenden bzw. zu verschließenden Verschluss (45) des Durchflusskanals, der fest mit einem beweglichen Stab (3) verbunden ist;
e) mindestens zwei Hohlräume (7, 14, 16), die im Inneren des Ventilgehäuses angeordnet sind;
e1) wobei ein erster Hohlraum (14) ein erstes Verbindungsmittel zu einer ersten Kammer des Reifens oder Schlauchs umfasst;
e2) wobei ein zweiter Hohlraum (16) ein zweites Verbindungsmittel zu einer zweiten Kammer des Reifens oder Schlauchs umfasst;
f) einen Verbindungskanal (12) zwischen dem ersten Hohlraum und dem zweiten Hohlraum;
g) wobei mindestens einer aus dem ersten und dem zweiten Hohlraum (14), die im Inneren des Ventilgehäuses angeordnet sind, dazu angepasst sind, bezüglich des Ventilgehäuses verschoben zu werden, wobei bei diesem Hohlraum die Wand fest mit dem beweglichen Stab verbunden ist, sodass dieser bewegliche Hohlraum (14) und der bewegliche Stab (3) dazu angepasst sind, gleichzeitig verschoben zu werden;
h) mindestens einer aus dem ersten und dem zweiten Hohlraum (16), die im Inneren des Ventilgehäuses angeordnet sind, bezüglich des Ventilgehäuses fest sind;
**dadurch gekennzeichnet, dass**
i) eine bezüglich des Ventilgehäuses feste Verschlussfläche (11) vorgesehen ist, die mit der Verschiebungsrichtung des beweglichen Hohlraums einen Winkel einschließt, die einen Verschluss des Verbindungskanals zwischen dem festen Hohlraum und dem beweglichen Hohlraum darstellt, sodass:
i1) in der Stabruheposition die feste Verschlussfläche dazu angepasst ist, den Verbindungskanal (12) zwischen dem festen Hohlraum und dem beweglichen Hohlraum zu blockieren, wodurch verhindert wird, dass Gas oder Flüssigkeit zwischen den beiden Hohlräumen strömt;
i2) in der Stabverschiebungsposition die feste Verschlussfläche von dem Verbindungskanal (12) zwischen dem festen Hohlraum und dem beweglichen Hohlraum getrennt ist, wodurch zugelassen wird, dass Gas oder Flüssigkeit zwischen den beiden Hohlräumen strömt.

2. Ventil für einen in Kammern unterteilten Reifen gemäß Anspruch 1, wobei der im Inneren des Ventilgehäuses angeordnete Hohlraum (16), der bezüglich des Ventilgehäuses fest ist, vollständig oder teilweise den beweglichen Hohlraum (14) umgibt.

3. Ventil für einen in Kammern unterteilten Reifen gemäß Anspruch 1 oder 2, wobei der zu öffnende bzw. zu verschließende Verschluss des Strömungskanals eine bewegliche Verschlussfläche (45) darstellt, die in dem beweglichen Hohlraum angeordnet ist, sodass:
a) in der Stabruheposition die bewegliche Verschlussfläche den Verbindungskanal zwischen dem ersten Ende und dem zweiten Ende blockiert, wodurch verhindert wird, dass Gas oder Flüssigkeit darin strömt;
b) in der Stabverschiebungsposition die bewegliche Verschlussfläche von dem Verbindungskanal zwischen dem ersten Ende und dem zweiten Ende getrennt ist, wodurch zugelassen wird, dass Gas oder Flüssigkeit darin strömt.

4. Ventil für einen in Kammern unterteilten Reifen gemäß Anspruch 3, wobei die bewegliche Verschlussfläche (45), die den zu öffnenden bzw. zu verschließenden Verschluss des Strömungskanals darstellt, mit der festen Verschlussfläche (11) in Kontakt kommt, die den Verbindungskanalverschluss zwischen dem festen Hohlraum und dem beweglichen Hohlraum darstellt, sodass:
a) in der Stabruheposition die bewegliche Verschlussfläche und die feste Verschlussfläche in Kontakt kommen, wodurch gleichzeitig der Strömungskanal (41) zwischen dem ersten Ende und dem zweiten Ende und der Verbindungskanal (12) zwischen dem festen Hohlraum und dem beweglichen Hohlraum blockiert wird;
b) in der Stabverschiebungsposition die bewegliche Verschlussfläche und die feste Verschlussfläche getrennt sind, wodurch zugelassen wird, dass gleichzeitig durch den Strömungskanal (41) zwischen dem ersten Ende und dem zweiten Ende und durch den Verbindungskanal (12) zwischen dem festen Hohlraum und dem beweglichen Hohlraum Gas oder Flüssigkeit strömt.

5. Ventil für einen in Kammern unterteilten Reifen gemäß einem der vorhergehenden Ansprüche, wobei der Verbindungskanal (12) zwischen dem festen Hohlraum und dem beweglichen Hohlraum in fester Verbindung mit dem beweglichen Hohlraum verschoben wird.

6. Ventil für einen in Kammern unterteilten Reifen gemäß einem der vorhergehenden Ansprüche, wobei die Symmetrieachse des beweglichen Hohlraums mit der Stabverschiebungsachse zusammenfällt.

7. Ventil für einen in Kammern unterteilten Reifen gemäß einem der vorhergehenden Ansprüche, wobei die Symmetrieachse des festen Hohlraums mit der Symmetrieachse des beweglichen Hohlraums zusam m enfällt.

8. Ventil für einen in Kammern unterteilten Reifen gemäß einem der vorhergehenden Ansprüche, wobei die Verschiebungsrichtung des beweglichen Stabs durch Führungselemente (4) bestimmt wird, die im Inneren des Ventilgehäuses angeordnet sind.

9. Ventil für einen in Kammern unterteilten Reifen gemäß einem der vorhergehenden Ansprüche, wobei die Verschiebungsrichtung des beweglichen Hohlraums durch Führungselemente bestimmt wird, die im Inneren des Ventilgehäuses angeordnet sind.

10. Ventil für einen in Kammern unterteilten Reifen gemäß einem der vorhergehenden Ansprüche, wobei der Durchmesser der beweglichen Verschlussfläche (45), die in dem beweglichen Hohlraum (14) angeordnet ist, größer als der Durchmesser der Außenkontur der Wand dieses beweglichen Hohlraums ist, sodass, wenn der Druck im Inneren des Reifens größer als der Außendruck ist, das Druckgefälle den beweglichen Hohlraum zu dem ersten Ende des Ventils hin drückt, wodurch die Dichtwirkung des Ventilverschlusses verstärkt wird.

11. Ventil für einen in Kammern unterteilten Reifen gemäß einem der vorhergehenden Ansprüche und eine luftdichte Zusatzvorrichtung, wobei das zweite Ende des Ventils mit der luftdichten Zusatzvorrichtung verbunden ist, sodass:
a) sie eine das darin ausgebildete Volumen isolierende Wand (85) hat;
b) es zwei oder mehr Öffnungen (86, 87) hat, die in seine Oberfläche gebohrt sind;
c) mindestens eine der Öffnungen mittels einer Leitung (84) durch das Innere der luftdichten Zusatzvorrichtung mit dem beweglichen Hohlraum des Ventils in Verbindung gebracht wird;
d) jede der Öffnungen dazu angepasst ist, durch Verbindungsmittel durch das Äußere der luftdichten Zusatzvorrichtung mit jeweils einer der Reifen- oder Schlauchkammern in Verbindung zu sein.

## Revendications

1. Valve pour pneumatique compartimenté, dans laquelle ladite valve comporte un corps qui présente :
a) une première extrémité (2) configurée pour être accouplée à des moyens de gonflage/dégonflage d'un pneumatique ou d'une chambre à air compartimenté ;
b) une seconde extrémité (18, 19), à l'opposé de la première extrémité, configurée pour être accouplée à un conduit de gonflage/dégonflage du pneumatique ou de la chambre à air compartimenté ;
c) un canal d'écoulement (41) entre la première extrémité et la seconde extrémité ;
d) un couvercle (45) d'ouverture/fermeture du canal d'écoulement solidement raccordé à une tige mobile (3) ;
e) au moins deux cavités (7, 14, 16) situées à l'intérieur du corps de valve :
e1) une première cavité (14) comprenant un premier moyen de raccordement à un premier compartiment du pneumatique ou de la chambre à air ;
e2) une seconde cavité (16) comprenant un second moyen de raccordement à un second compartiment du pneumatique ou de la chambre à air ;
f) un canal de communication (12) entre la première cavité et la seconde cavité ;
g) au moins une (14) des première et seconde cavités située à l'intérieur du corps de valve est apte à être déplacée par rapport au corps de valve, cette cavité ayant sa paroi solidement raccordée à la tige mobile de sorte que cette cavité (14) mobile et la tige mobile (3) sont conçues pour être déplacées en même temps ;
g) au moins une (16) des première et seconde cavités située à l'intérieur du corps de valve est fixe par rapport au corps de valve,
**caractérisée en ce que** :
i) il y a une surface fixe (11) de fermeture par rapport au corps de valve, qui fait un angle avec la direction de déplacement de la cavité mobile et constitue un couvercle du canal de communication entre la cavité fixe et la cavité mobile de telle sorte que :
i1) dans la position de repos de la tige, la surface fixe de fermeture est apte à boucher le canal de communication (12) entre la cavité fixe et la cavité mobile,
empêchant tout écoulement de gaz ou de liquide entre les deux cavités ;
i2) dans la position de déplacement de la tige, la surface fixe de fermeture est séparée du canal de communication (12) entre la cavité fixe et la cavité mobile, permettant un écoulement de gaz ou de liquide entre les deux cavités.

2. Valve pour pneumatique compartimenté selon la revendication 1, dans laquelle la cavité (16) située à l'intérieur du corps de valve qui est fixe par rapport au corps de valve entoure complètement ou partiellement la cavité mobile (14).

3. Valve pour pneumatique compartimenté selon la revendication 1 ou 2, dans laquelle le couvercle d'ouverture/fermeture du canal d'écoulement constitue une surface mobile (45) de fermeture située dans la cavité mobile, de telle sorte que :
a) dans la position de repos de la tige, la surface mobile de fermeture bouche le canal de communication entre la première extrémité et la seconde extrémité, y empêchant tout écoulement de gaz ou de liquide ;
b) dans la position de déplacement de la tige, la surface mobile de fermeture est séparée du canal de communication entre la première extrémité et la seconde extrémité, y permettant un écoulement de gaz ou de liquide.

4. Valve pour pneumatique compartimenté selon la revendication 3, dans laquelle la surface mobile (45) de fermeture qui constitue le couvercle d'ouverture/fermeture du canal d'écoulement entre en contact avec la surface fixe (11) de fermeture qui constitue le couvercle de canal de communication entre la cavité fixe et la cavité mobile, de telle sorte que :
a) dans la position de repos de la tige, la surface mobile de fermeture et la surface fixe de fermeture sont en contact, bouchant simultanément le canal d'écoulement (41) entre la première extrémité et la seconde extrémité et le canal de communication (12) entre la cavité fixe et la cavité mobile ;
b) dans la position de déplacement de la tige, la surface mobile de fermeture et la surface fixe de fermeture sont séparées, permettant de ce fait un écoulement de gaz ou de liquide simultané par le canal d'écoulement (41) entre la première extrémité et la seconde extrémité et par le canal de communication (12) entre la cavité fixe et la cavité mobile.

5. Valve pour pneumatique compartimenté selon l'une quelconque des revendications précédentes, dans laquelle le canal de communication (12) entre la cavité fixe et la cavité mobile est déplacé en étant solidaire de la cavité mobile.

6. Valve pour pneumatique compartimenté selon l'une quelconque des revendications précédentes, dans laquelle l'axe de symétrie de la cavité mobile coïncide avec l'axe de déplacement de la tige.

7. Valve pour pneumatique compartimenté selon l'une quelconque des revendications précédentes, dans laquelle l'axe de symétrie de la cavité fixe coïncide avec l'axe de symétrie de la cavité mobile.

8. Valve pour pneumatique compartimenté selon l'une quelconque des revendications précédentes, dans laquelle la direction de déplacement de la tige mobile est déterminée par des éléments (4) de guidage situés à l'intérieur du corps de valve.

9. Valve pour pneumatique compartimenté selon l'une quelconque des revendications précédentes, dans laquelle la direction de déplacement de la cavité mobile est déterminée par des éléments de guidage situés à l'intérieur du corps de valve.

10. Valve pour pneumatique compartimenté selon l'une quelconque des revendications précédentes, dans laquelle le diamètre de la surface mobile (45) de fermeture située dans la cavité mobile (14) est supérieur au diamètre du contour externe de la paroi de cette cavité mobile, de telle sorte que, si la pression à l'intérieur du pneumatique est supérieure à la pression externe, le gradient de pression pousse la cavité mobile vers la première extrémité de la valve, augmentant de ce fait l'étanchéité de la fermeture de la valve.

11. Ensemble comprenant une valve pour pneumatique compartimenté selon l'une quelconque des revendications précédentes et un dispositif auxiliaire étanche à l'air, dans lequel la seconde extrémité de la valve est raccordée audit dispositif auxiliaire étanche à l'air, de telle sorte que :
a) il comporte une paroi qui isole le volume (85) qui y est formé ;
b) il comporte deux ou plusieurs orifices (86, 87) percés dans sa surface ;
c) au moins un des orifices est en, communication avec la cavité mobile de la valve au moyen d'un conduit (84) traversant l'intérieur du dispositif auxiliaire étanche à l'air ;
d) chacun des orifices est apte à communiquer avec chacun des compartiments de pneumatique ou de chambre à air par un moyen de raccordement traversant l'extérieur du dispositif auxiliaire étanche à l'air.
